(19) Europäisches Patentamt
European Patent Office
Office européen des brevets

(11) **EP 4 625 252 A1**

(12) **EUROPEAN PATENT APPLICATION**

(43) Date of publication:
**01.10.2025 Bulletin 2025/40**

(21) Application number: **25166260.7**

(22) Date of filing: **26.03.2025**

(51) International Patent Classification (IPC):
**G06N 3/045** (2023.01)    **G06N 3/084** (2023.01)

(52) Cooperative Patent Classification (CPC):
**G06N 3/084; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2024 JP 2024049609**

(71) Applicant: **CANON KABUSHIKI KAISHA Tokyo 146-8501 (JP)**

(72) Inventor: **HORIKAWA, Yuta Tokyo, 146-8501 (JP)**

(74) Representative: **Canon Europe Limited European Intellectual Property Group 4 Roundwood Avenue Stockley Park Uxbridge UB11 1AF (GB)**

(54) **INFORMATION PROCESSING APPARATUS, CONTROL METHOD FOR INFORMATION PROCESSING APPARATUS, AND PROGRAM**

(57)    An information processing apparatus includes: an inference unit to which a neural network is applied, the neural network being configured to use a set of temporally consecutive images and a set of temporally consecutive image features as inputs, and output a set of images and a set of image features for the inputs; a determining unit configured to determine which one of first and second configurations to which the neural network is to be configured, the first configuration having a first input-output temporal relationship and the second configuration having a second input-output temporal relationship different from the first input-output temporal relationship; a configuration changing unit configured to change a node connection and an input-output temporal relationship of the neural network to change the configuration of the neural network according to the result determined by the determining unit; and a training unit configured to train the neural network.

FIG. 2A

FIG. 2B

EP 4 625 252 A1

**Description**

TECHNICAL FIELD

The present disclosure relates to an information processing apparatus, a control method for an information processing apparatus, and a program.

BACKGROUND OF THE INVENTION

Description of the Related Art

In recent years, methods using neural networks have been actively studied in image processing technology to improve the quality of images and videos. Some methods have been developed to implement high-quality image processing, such as noise reduction, deblurring, and super-resolution.

The technique known as dropout described in U.S. Patent No. 9,406,017 is often used as a technique for training neural networks. Dropout is a technique to suppress over-training by removing nodes in a neural network at a certain probability and training the neural network with the configuration excluding the removed nodes.

Training with dropout can be regarded as one of ensemble techniques called bagging and can also be expected to reduce variation in predicted values of neural networks.

SUMMARY OF THE INVENTION

Neural networks may have node connections where error back propagation is not performed during training, depending on their structures. Of the possible outputs of a neural network, predicted values output through node connections where error back propagation is not performed during training tend to differ from predicted values of the other outputs in prediction accuracy and the characteristics of prediction results. For example, it is assumed that high-quality image processing is performed on a plurality of temporally consecutive images by using a neural network with the above-described structure. At this time, different image quality results can be obtained in some of a plurality of temporally consecutive image processing results. In such a situation, when the image processing results are consecutively viewed as a video, they may appear as an unnatural video.

The present disclosure reduces the influence of variation in outputs caused by the characteristics of the structure of a neural network in a more suitable manner.

The present invention in its first aspect provides an information processing apparatus comprising: an inference unit to which a neural network is applied, the neural network being configured to use at least one of a set of temporally consecutive images and a set of temporally consecutive image features as inputs, and output at least one of a set of images and a set of image features, to which image processing is applied, for the inputs; a determining unit configured to determine which one of a first configuration and a second configuration to which the neural network (e.g., a configuration of the neural network) is to be configured (e.g., switched), wherein the first configuration has a first input-output temporal relationship and the second configuration has a second input-output temporal relationship different from the first input-output temporal relationship; a configuration changing unit configured to change a node connection of the neural network and an input-output temporal relationship of the neural network to change the configuration of the neural network according to the result determined by the determining unit (e.g., to configure the neural network according to any one of the first configuration and the second configuration); and a training unit configured to train the neural network.

When the configuration and control described above are applied, the neural network can be trained while being switched among a plurality of configurations (e.g., the neural network may be changed between multiple configurations, i.e., not limited to the two configurations described above). When the neural network is trained while being switched between different configurations, the effect of reducing variation in the output of the neural network can be expected.

The present invention in its second aspect provides an information processing apparatus comprising: an acquisition unit configured to acquire an image captured by an image capturing apparatus; and an image processing unit configured to input the image acquired by the acquisition unit to a neural network to apply image processing to the image, the neural network being configured to use at least one of a set of temporally consecutive images and a set of temporally consecutive image features as inputs, and output at least one of a set of images and a set of image features, to which the image processing is applied, for the inputs, wherein the neural network is configured to be trained in a manner such that which one of a first configuration and a second configuration, to which the neural network (e.g., a configuration of the neural network) is to be configured (e.g., switched), is determined, and the neural network is configured (e.g., changed to any one of the first configuration and the second configuration) according to the determined result by changing a node connection and an input-output temporal relationship of the neural network. The first configuration has a first input-output temporal relationship, and the second configuration has a second input-output temporal relationship different from the first input-output temporal relationship.

When the configuration and control described above are applied, the probability to switch to the neural network having a structure without adverse effects increases with an increase in the adverse effects on image quality, caused by the structure of the neural network. As a result, it is possible to train the neural network while minimizing the degree of adverse effects on image quality that can be caused by the structure of a particular neural network.

The present invention in its third aspect provides a control method for an information processing apparatus, the control method comprising: an inference step to which a neural network is applied, the neural network being configured to use at least one of a set of temporally consecutive images and a set of temporally consecutive image features as inputs, and output at least one of a set of images and a set of image features, to which image processing is applied, for the inputs; a determining step of determining which one of a first configuration and a second configuration, to which the neural network (e.g., a configuration of the neural network) is to be configured (e.g., switched), wherein that the first configuration has a first input-output temporal relationship and the second configuration has a second input-output temporal relationship different from the first input-output temporal relationship; a configuration changing step of changing a node connection of the neural network and an input-output temporal relationship of the neural network to change the configuration of the neural network according to the result determined by the determining step (e.g., to configure the neural network according to any one of the first configuration and the second configuration); and a training step of training the neural network.

The present invention in its fourth aspect provides a control method for an information processing apparatus, the control method comprising: an acquisition step of acquiring an image captured by an image capturing apparatus; and an image processing step of inputting the image acquired by the acquisition step to a neural network to apply image processing to the image, the neural network being configured to use at least one of a set of temporally consecutive images and a set of temporally consecutive image features as inputs, and outputting at least one of a set of images and a set of image features, to which the image processing is applied, for the inputs, wherein the neural network is configured to be trained in a manner such that which one of a first configuration and a second configuration, to which the neural network (e.g., a configuration of the neural network) is to be configured (e.g., switched), is determined, and the neural network is configured (e.g., changed to any one of the first configuration and the second configuration) according to the determined result by changing a node connection and an input-output temporal relationship of the neural network. The first configuration has a first input-output temporal relationship, and the second configuration has a second input-output temporal relationship different from the first input-output temporal relationship.

The present invention in its fifth aspect provides a program comprising: an inference unit to which a neural network is applied, the neural network being configured to use at least one of a set of temporally consecutive images and a set of temporally consecutive image features as inputs, and output at least one of a set of images and a set of image features, to which image processing is applied, for the inputs; a determining unit configured to determine which one of a first configuration and a second configuration, to which the neural network (e.g., a configuration of the neural network) is to be configured (e.g., switched), wherein the first configuration has a first input-output temporal relationship and the second configuration has a second input-output temporal relationship different from the first input-output temporal relationship; a configuration changing unit configured to change a node connection of the neural network and an input-output temporal relationship of the neural network to change the configuration of the neural network according to the result determined by the determining unit (e.g., to configure the neural network according to any one of the first configuration and the second configuration); and a training unit configured to train the neural network.

The present invention in its sixth aspect provides a program comprising: an acquisition unit configured to acquire an image captured by an image capturing apparatus; and an image processing unit configured to input the image acquired by the acquisition unit to a neural network to apply image processing to the image, the neural network being configured to use at least one of a set of temporally consecutive images and a set of temporally consecutive image features as inputs, and output at least one of a set of images and a set of image features, to which the image processing is applied, for the inputs, wherein the neural network is configured to be trained in a manner such that which one of a first configuration and a second configuration, to which the neural network (e.g., a configuration of the neural network) is to be configured (e.g., switched) is determined, and the neural network is configured (e.g., changed to any one of the first configuration and the second configuration) according to the determined result by changing a node connection and an input-output temporal relationship of the neural network. The first configuration has a first input-output temporal relationship, and the second configuration has a second input-output temporal relationship different from the first input-output temporal relationship.

The first configuration may be configured to use, as an input, at least one of: an image feature output in a past inference process by the neural network and an image that is an input for a current inference process.

The first configuration may be configured to output an image to which image processing corresponding to the image feature output in the past inference process by the neural network and at least one of an image and an image feature to which image processing corresponding to the image input in the current inference process is applied, for the inputs.

The first configuration may be configured such that the image feature output in the past inference process by the neural network and given as the input is input in a state of being disconnected from nodes of the neural network.

The second configuration may be configured to use images as the inputs.

The determining unit may be configured to probabilistically determine which one of the first configuration and the second configuration, to which the neural network is to be configured (e.g., switched).

The training unit (or method step) may be configured to train the neural network by using an error calculated based on a difference between an image to which image processing corresponding to an input given to the neural network is applied, and an image output by the neural network.

The training unit (or method step) may be configured to update parameters of the neural network with an error back propagation method using the error.

It will be appreciated that the embodiments are not limited to two configurations of the neural network. For example, the determining unit (or method step) may be configured to determine which one of three or more configurations (e.g., a first, a second, and a third configurations) to which the neural network is to be configured. Each of the configurations may have different node connections and input-output temporal relationships from one another. In situations where the neural network is trained while being switched among a larger number of structures, the effect of further reducing variation in the output of the neural network can be expected.

In embodiments, the configuration changing unit (or method step) may be configured to change the configuration of the neural network to any one of three or more configurations that are different from one another in a node connection of the neural network and an input-output temporal relationship of the neural network.

The information processing apparatus (or method) may comprise an evaluation unit (or method step) configured to calculate variation in image quality among a series of images output from the neural network and to which image processing is applied, as an evaluation value, wherein the determining unit (or method step) may be configured to change a probability based on the evaluation value calculated by the evaluation unit (or method step), the probability determining which one of the first configuration and the second configuration, to which the neural network is to be configured (e.g., switched).

Further features of the present invention will become apparent from the following description of example embodiments with reference to the attached drawings.

BRIEF DESCRIPTION OF THE DRAWINGS

Fig. 1 is a block diagram that shows an example of the hardware configuration of an information processing apparatus.
Figs. 2A and 2B are block diagrams that show examples of the functional configuration of the information processing apparatus.
Fig. 3 is a flowchart that shows an example of a process performed by the information processing apparatus.
Fig. 4 is a flowchart that shows an example of a process performed by the information processing apparatus.
Fig. 5 is a diagram that shows an example of the structure of a neural network.
Fig. 6 is a diagram that shows an example of the structure of a neural network.
Fig. 7 is a diagram that shows an example of the configuration of a neural network and an inference process.
Fig. 8 is a diagram that shows an example of the configuration a neural network and an inference process.
Figs. 9A to 9C are diagrams that show examples of the structure of a neural network.
Fig. 10 is a block diagram that shows an example of the functional configuration of an information processing apparatus.
Fig. 11 is a flowchart that shows an example of a process performed by the information processing apparatus.
Fig. 12 is a block diagram that shows an example of the functional configuration of an information processing apparatus.
Fig. 13 is a flowchart that shows an example of a process performed by the information processing apparatus.

DESCRIPTION OF THE EMBODIMENTS

Hereinafter, embodiments of the present disclosure will be described in detail with reference to the attached drawings.

In the specification and drawings, like reference signs are assigned to components having substantially the same functional configurations and the repeated description thereof is omitted. Configurations that will be described in the following embodiments are just examples, and the present disclosure is not limited to the illustrated configurations.

First Embodiment

A first embodiment of the present disclosure will be described below.

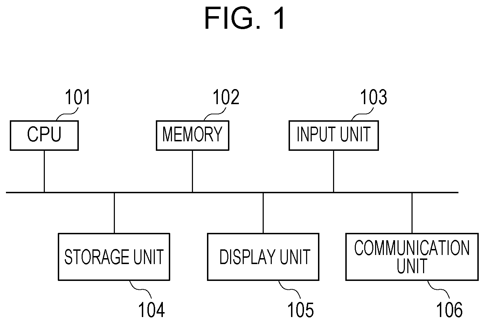

Initially, an example of the hardware configuration of an information processing apparatus 100 according to the present embodiment will be described with reference to Fig. 1. The information processing apparatus 100 can be made up of a general-purpose information processing apparatus including a central processing unit (CPU) 101, a memory 102, an input unit 103, a storage unit 104, a display unit 105, a communication unit 106, and the like.

The CPU 101 is a central processing unit that controls various operations of the information processing apparatus 100. The memory 102 is a main memory for the CPU 101 and is used as work areas or temporary storage areas for loading various programs. The storage unit 104 is a storage area that stores various programs and data.

The input unit 103 is an input interface for the information processing apparatus 100 to receive instructions from a user. The input unit 103 can be implemented by various operating devices, such as pointing devices, touch panels, and keyboards.

The display unit 105 is an output interface for the information processing apparatus 100 to present various pieces of information to the user. The display unit 105 can be implemented by a display device, such as a display, that presents information to the user by displaying various pieces of display information, screens, and the like.

The communication unit 106 is a communication interface for the information processing apparatus 100 to connect with various networks, such as the Internet and local area networks (LANs). The configuration of the communication unit 106 may be changed as needed according to the type of network to which the communication unit 106 is connected.

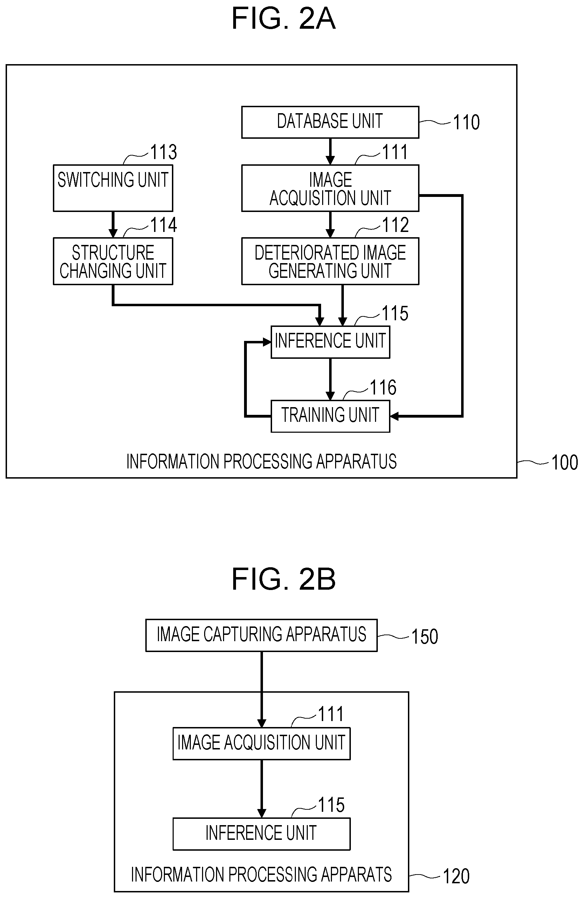

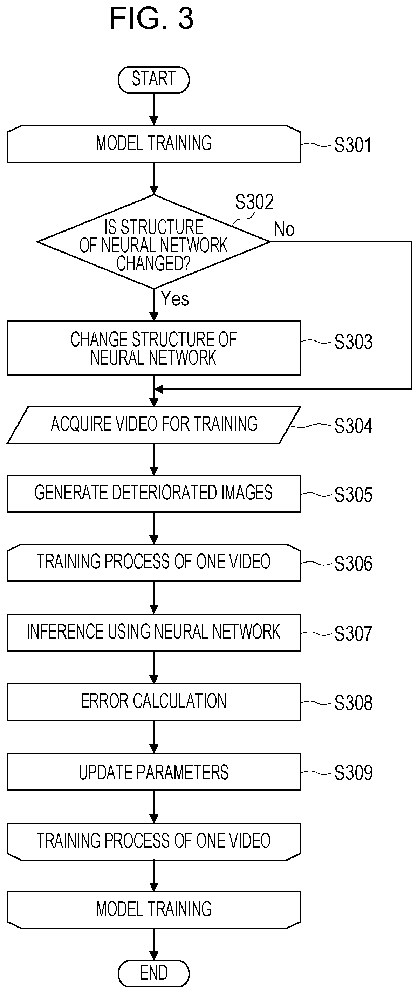

The CPU 101 loads the programs stored in the storage unit 104 into the memory 102 and runs the programs, to implement functional configurations (e.g., as described later with reference to Figs. 2A, 2B, 10, 12, and the like) and processes (e.g., as described later with reference to Figs. 3, 4, 11, 13, and the like).

An example of the functional configuration of the information processing apparatus 100 according to the embodiment will be described with reference to Fig. 2A. The information processing apparatus 100 shown in Fig. 2A corresponds to a so-called training apparatus that trains a neural network that applies image processing to input images. In the present embodiment, as an example of image processing that the neural network applies to input images, various descriptions will be provided focusing on a case where a noise reduction process is applied. In the noise reduction process, noise is removed from a noisy image that is an image including noise to generate an image with no noise. However, noise reduction is just an example and does not limit the image processing that the neural network applies to input images. In a specific example, even in cases where high-quality image processing, such as super-resolution and blurring, is applied, a configuration and a process (e.g., as described later) can be similarly applied.

The information processing apparatus 100 (e.g., training apparatus) includes a database unit 110, an image acquisition unit 111, a deteriorated image generating unit 112, a switching unit 113, a structure changing unit 114, an inference unit 115, and a training unit 116.

The database unit 110 saves a set of images not containing noise in temporally consecutive images as training images for training the neural network. In the following description, the images not containing noise are also referred to as clean images.

The image acquisition unit 111 acquires a selected image from among an image group saved in the database unit 110.

The deteriorated image generating unit 112 generates a deteriorated image by applying an artificially degrading process to a clean image. In the present embodiment, a deteriorated image represents a noisy image that is obtained by adding noise to a clean image.

The inference unit 115 uses the neural network to execute an inference process when receiving at least one of an image and an image feature as an input. The interference unit 115 acquires at least one of the image and the image feature, to which image processing is applied.

The switching unit 113 determines whether to switch the neural network of the inference unit 115 to a neural network with another predetermined different structure.

The structure changing unit 114 changes the node connections and input-output configuration of the neural network of the inference unit 115 to the structure of the neural network, determined by the switching unit 113. An example of the structure of the neural network that is a switching target will be separately described in detail later.

The training unit 116 updates the weights of the neural network of the inference unit 115 based on an error back propagation method.

Next, an example of the process performed by the information processing apparatus 100 (e.g., training apparatus) according to the present embodiment will be described focusing on a process related to training of the neural network that applies a noise reduction process to input images with reference to Fig. 3 together with the functional configuration example shown in Fig. 2A.

A series of processes indicated by a loop symbol with S301 represents a series of processes related to training of the neural network used by the inference unit 115, and is repeatedly executed until a training termination condition is satisfied (e.g., until a predetermined number of times of training are performed). With this series of processes, parameters like the weights and biases of the network are updated. At the start of training, initial parameter values are given to the neural network, and then repeated training is performed to update the parameters of the network.

"Toward Convolutional Blind Denoising of Real Photographs, Shi Guo et al., 2019" suggests a convolutional neural network (CNN) for achieving noise reduction. A CNN is made up of multiple convolutional layers and activation functions. Particularly, a neural network with a U-shaped structure called U-Net is used as a neural network for implementing high-quality image processing, such as noise reduction and super-resolution. With the technique described in "Toward Convolutional Blind Denoising of Real Photographs, Shi Guo et al., 2019", noise reduction is also performed by using U-Net. In the present embodiment, it is assumed that a structure based on U-Net used in "Toward Convolutional Blind Denoising of Real Photographs, Shi Guo et al., 2019 is also used. However, this structure is just an example, and the structure is not limited as long as the neural network can implement high-quality image processing.

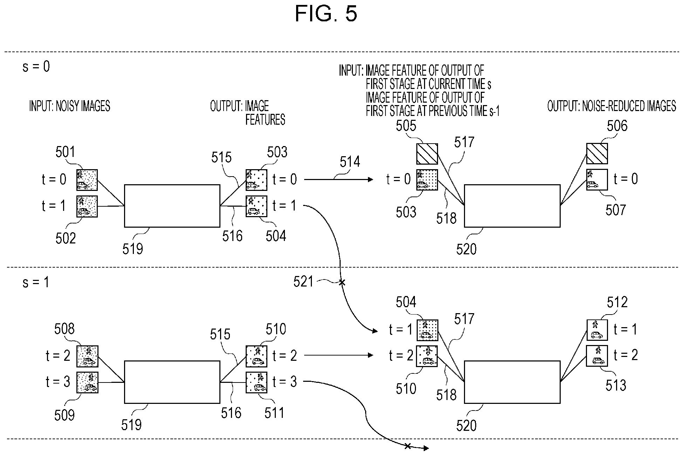

Here, the correspondence between the input and output of the neural network that has a first input-output temporal relationship as an input-output temporal relationship will be described as an example of the correspondence between the input and output of the neural network used in the present embodiment with reference to Fig. 5.

A first neural network shown in Fig. 5 is made up of a first stage 519 and a second stage 520. When the first stage 519 receives temporally consecutive images (hereinafter, also referred to as time-series images), the first stage 519 outputs image features at times corresponding to the input images. The second stage 520 receives the image features output from the first stage 519 as inputs, and then outputs images obtained by applying image processing to the input time-series images. This neural network is used in a system that temporally consecutively executes image processing. Here, it is assumed that, where time to execute image processing is s, image processing is executed at each time s = 0, 1, ...

In image processing at time s = 0, a noisy image 501 at time t = 0 and a noisy image 502 at time t = 1 are given as inputs to the neural network, and additionally a dummy image feature (simply referred to as "dummy") 505 is given. For these inputs, the neural network outputs an image feature 504 (intermediate feature) at time t = 1, a noise-reduced image 507 at time t = 0, and a dummy 506.

In image processing at time s = 1, an image 508 at time t = 2, an image 509 at time t = 3, and an image feature 504 at time t = 1 are given to the neural network as inputs. For these inputs, the neural network outputs an image feature 511 at time t = 3, a noise-reduced image 512 at time t = 1, and a noise-reduced image 513 at time t = 2.

In this way, when the neural network shown in Fig. 5 receives images and image features of three consecutive times, the neural network outputs images and image features of three times for the inputs. At this time, the image feature output in the own inference process of the neural network at the previous time is applied as one image feature of the inputs. However, for the image processing at s = 1, the image feature 504 at t = 1 is assumed to be input in a state of being disconnected from the neural network.

The present embodiment aims to achieve training of the first neural network.

In the case of the configuration of the first neural network, an image feature output in the inference process at a previous time is used as a feature input to the second stage 520. In other words, the inference process is executed by using not only an image input at the current time (e.g., at a time associated with the currently active inference process) but also information about an image input at a previous time (e.g., at a time subsequent to the currently active inference process). Therefore, an image processing result that incorporates information about an image input to the image processing at a previous time is obtained.

In S302, the switching unit 113 determines which one of a plurality of predetermined structures is to be used as the structure of the neural network, and determines whether the structure of the neural network should be changed as a result of the determination.

When the switching unit 113 determines in S302 that the structure of the neural network is changed, the process proceeds to S303.

On the other hand, when the switching unit 113 determines in S302 that the structure of the neural network is not changed, the process proceeds to S304.

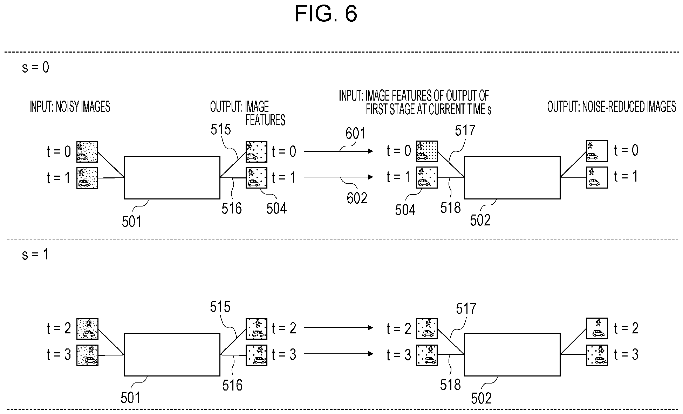

The predetermined structures of the neural network are structures in which the node connections and input-output temporal relationship of the first neural network are changed. In the present embodiment, other than the neural network with a first input-output temporal relationship as an input-output temporal relationship, a second neural network shown in Fig. 6 is used. The details of the second neural network will be separately described later.

The switching unit 113 probabilistically determines any one of the plurality of predetermined structures for the structure of the neural network to be used in training. In the present embodiment, it is assumed that the switching unit 113 switches the structure of the neural network to the structure of the first neural network at a probability of 50% and to the structure of the second neural network at a probability of 50%.

In S303, the structure changing unit 114 changes the structure of the neural network of the inference unit 115 to the structure determined by the switching unit 113 in S302.

For example, the structure changing unit 114 changes the node connections and input-output temporal relationship of the first neural network to change the structure of the first neural network to a different structure. In the present embodiment, in the case of the structure of the first neural network before it is changed, the structure of the neural network is changed to the structure of the second neural network. The oldest time of the input images may be referred to as a reference time. For example, if the second neural network receives as inputs an image at t and an image at t+1, then the second neural network outputs a noise-reduced image at t and a noise-reduced image at t+1 to which the noise reduction process is applied.

When the structure changing unit 114 changes the structure of the neural network, the structure changing unit 114 may also change the node connection relationship in the network. The first neural network shown in Fig. 5 gives the feature output from a connection 516 of the first stage 519 to a connection 517 that is the input of the second stage 520. However, the output feature is given in a state of being disconnected from the first stage 519 and the second stage 520. The example shown in Fig. 5 shows that a connection 521 that connects the output of the first stage 519 with the input of the second stage 520 is disconnected. Therefore, during error back propagation, no errors are propagated to the connection 516 of the first stage 519.

On the other hand, in the second neural network shown in Fig. 6, a connection 516 that is the output of the first stage 519 is connected to a connection 518 that is the input of the second stage 520 via a connection 602. In other words, the first stage 519 and the second stage 520 are connected between the connections 516, 518. Therefore, in the second neural network, unlike the first neural network, errors are back-propagated to the connection 516 of the first stage 519 during error back propagation.

In addition, in the first neural network, a connection 515 that is the output of the first stage 519 is connected to a connection 518 that is the input of the second stage 520 via a connection 514. On the other hand, in the second neural network, a connection 515 that is the output of the first stage 519 is connected to a connection 517 that is the input of the second stage 520 via a connection 601. In other words, the connection 515 through which the first stage 519 outputs an image feature and an input-side connection of the second stage 520 may be connected in a mode in which the first neural network and the second neural network are different from each other.

The configuration of the first neural network shown in Fig. 5 corresponds to an example of a first configuration, and the configuration of the second neural network shown in Fig. 6 corresponds to an example of a second configuration. In other words, the input-output temporal relationship in the first neural network shown in Fig. 5 corresponds to an example of a first input-output temporal relationship, and the input-output temporal relationship in the second neural network shown in Fig. 6 corresponds to an example of a second input-output temporal relationship.

In S304, the image acquisition unit 111 acquires one of the videos saved in the database unit 110. The image acquisition unit 111 treats the acquired video as a set of time-series images and outputs the images to each of the deteriorated image generating unit 112 and the training unit 116.

In S305, the deteriorated image generating unit 112 generates deteriorated images by using the acquired images. In the present embodiment, the deteriorated image generating unit 112 generates noisy images as deteriorated images.

In a specific example, the deteriorated image generating unit 112 adds noise to the images. The noise is modeled by analyzing the noise characteristics of an image sensor of an image capturing apparatus. The noise is assumed as noise that occurs in the course in which photons detected by the image sensor are converted into digital signals. Examples of a source of noise include photon shot noise, read noise, dark current noise, and quantization error, and it is assumed that these are modeled.

The deteriorated image generating unit 112 outputs the generated noisy images to the inference unit 115.

The series of processes indicated by the loop symbol with S306 represents a process of training the neural network of the inference unit 115 by using the time-series images that make up one video acquired in S304. The process is executed by the information processing apparatus 100. In the series of processes, the sets of noisy images generated in S305 and clean images are used in chronological order, the inference process of the neural network is sequentially executed, and the weights of the neural network are updated based on the inference results.

In S307, the inference unit 115 uses the neural network to execute the inference process and outputs noise-reduced images in which noise contained in the input images is removed.

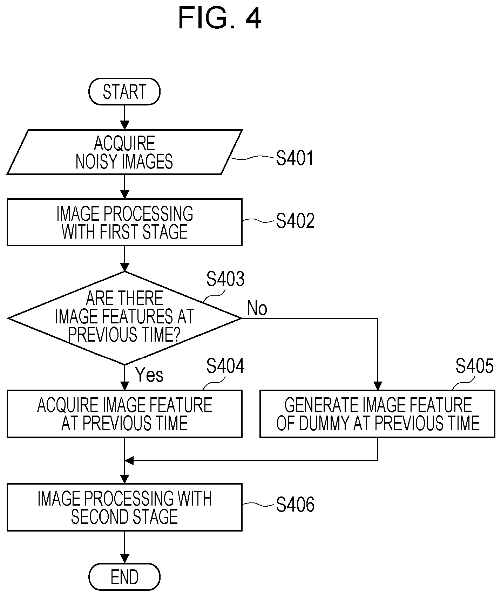

Here, an example of the inference process using the neural network, performed by the inference unit 115, will be described focusing on the inference process performed by the first neural network with reference to Fig. 4.

In S401, the inference unit 115 acquires the noisy images generated in S305 as inputs to the neural network. The noisy images that are used as inputs for the neural network and acquired here are two chronologically consecutive images and are a noisy image at t and a noisy image at t+1 where the oldest time of the input images is reference time t.

In S402, the inference unit 115 causes the first stage 519 to execute the inference process by inputting the input images acquired in S401 to the first stage 519. The first stage 519 outputs image features as a result of the execution of the inference process. The obtained image feature is output to the second stage 520. At this time, the image feature used in the inference process at a subsequent time is held after being disconnected from the first stage 519 so that errors do not propagate back during error backpropagation.

Here, a more detailed description will be provided by giving a specific example with reference to Fig. 5. The process of S402 corresponds to the inference process of the first stage 519 at certain time s. For example, when s = 0, a noisy image 501 at t = 0 and a noisy image 502 at t = 1 are input to the first stage 519. For the inputs, the first stage 519 outputs an image feature 503 corresponding to t = 0 and an image feature 504 corresponding to t = 1. At this time, the image feature 503 at t = 0 is output to be input to the inference process of the second stage 520 at time s. The image feature 504 at t = 1 is held to be input to the second stage 520 at time s+1 and is used during the inference process of the second stage 520 at time s+1.

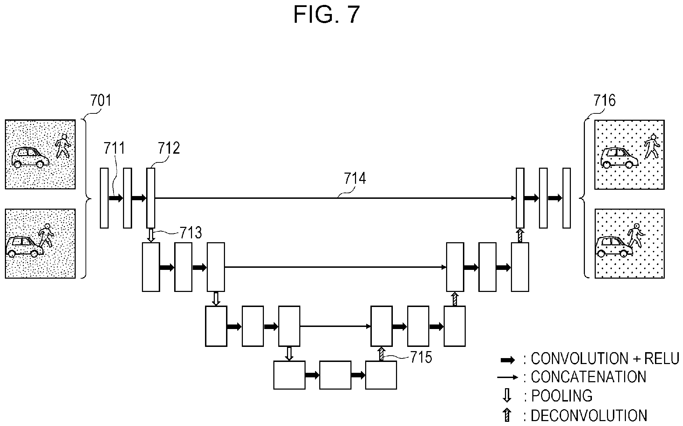

Here, an example of the detailed configuration and inference process of the first stage 519 will be described with reference to Fig. 7. A U-Net is used as the first stage 519. The U-Net is made up of an encoder that generates a feature while compressing an image and a decoder that reconstructs an image from the compressed feature. Two temporally consecutive images concatenated in a channel direction are given as inputs.

First, in the encoder, features different in resolution and the number of channels are generated from input images 701. The network executes a process 711 for applying a convolution operation and a relu function multiple times to the input images 701 to generate features 712. The generated features 712 have a reduced resolution as a result of pooling 713, and a convolution operation and a relu function are repeatedly applied to the features 712 again. Thus, features with an increased number of channels are obtained. The features 712 generated at this time are used during reconstruction of images (described later), and are skip-connected 714 with other features that are generated while being upsampled. This series of processes is repeated, and a deconvolution operation 715 is applied to the compressed features, with the result that the features are reconstructed into images while the number of channels is reduced and the resolution is increased. At this time, the features upsampled through deconvolution are skip-connected with the features generated by the encoder, and are repeatedly applied with a plurality of convolution operations, application of relu function, and deconvolution. Finally, image features 716 with the desired resolution and number of channels are output.

In S403, the inference unit 115 checks whether there are features output in the inference process at previous time, which will be the input of the second stage 520 of the neural network.

When the inference unit 115 determines in S403 that there are features output in the inference process at previous time, the process proceeds to S404.

On the other hand, when the inference unit 115 determines in S403 that there are no features output in the inference process at previous time, the process proceeds to S405.

Depending on time s at which the first neural network executes image processing, there can be no image feature at time s-1, output in the inference process at previous time and used as inputs. For example, at the time of execution of the inference process at time s = 0 at which image processing is executed for the first time, no inference process is executed before, so there is no image feature at time s-1.

In S404, the inference unit 115 acquires the image feature that is output from the first stage 519 in the inference process at previous time and that will be the input of the second stage 520.

In image processing after time s = 1, there is an image feature at time s-1 that is output in the inference process at previous time. In the first neural network, for example, at time s = 1, the image feature at time t = 1 output at previous time s = 0 is acquired as the input of the second stage 520.

In S405, the inference unit 115 generates a dummy image feature that will be the input of the second stage 520.

In image processing at current time, when there is no image feature that will be the input to the second stage 520 and that is output in the inference process at previous time and that will be its own input, the inference unit 115 generates a dummy image feature. The dummy image feature has the same width, height, and the number of channels as the image feature that will be the input of the second stage 520 and is generated as an image with a value of zero. This value is not limited to zero. A value determined during training may be used as long as the value has the same width, height, and number of channels as the image feature used as an input.

In S406, the inference unit 115 inputs the image feature acquired in S402 and the image feature acquired in the inference process at the previous time, acquired in S404 or S405, into the second stage 520. The second stage 520 executes the inference process on the inputs and outputs noise-reduced images in which noise contained in the input images is removed. The inference unit 115 outputs the noise-reduced images obtained as the outputs of the second stage 520 to the training unit 116.

Here, a more detailed description will be provided by giving a specific example with reference to Fig. 5. The process of S406 corresponds to the inference process of the second stage 520 at certain time s. For example, when s = 0, the image feature 503 at t = 0 and the dummy 505 generated in S405 are input to the second stage 520. For the inputs, the second stage 520 outputs the noise-reduced image 507 corresponding to t = 0 and the dummy 506 corresponding to the dummy image feature. When s = 1, the image feature 504 at t = 1 and an image feature 510 at t = 2 are input to the second stage 520. For the inputs, the second stage 520 outputs a noise-reduced image 512 corresponding to t = 1 and a noise-reduced image 513 corresponding to t = 2.

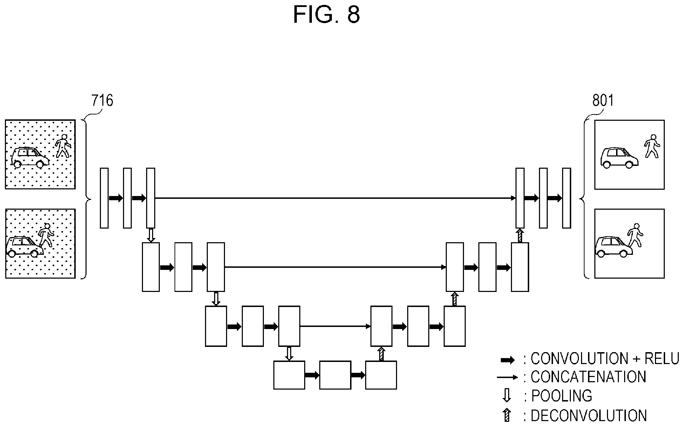

Here, an example of the detailed configuration and inference process of the second stage 520 will be described with reference to Fig. 8. The second stage 520 uses a similar layer structure to the first stage 519 shown in Fig. 7. Therefore, the operation of the inference process is similar to the operation of the first stage 519. However, the image features 716 output from the first stage 519 are applied as inputs, and noise-reduced images 801 corresponding to the image features 716 are obtained as outputs.

An example of the inference process performed by the first neural network has been described.

Next, an example of the inference process performed by the second neural network will be described. However, the inference process of the second neural network is substantially similar to the inference process of the first neural network shown in Fig. 4. However, in the second neural network, the second stage 520 does not have the input of the image feature output in the inference process at a previous time s-1 in the inference process at current time s. Instead, the image features output in the inference process at current time s are applied as inputs. Therefore, the processes of S403, S404, and S405, of the series of processes shown in Fig. 4, are skipped.

The above is the inference process of the neural network shown as S307 in Fig. 3.

In S308, the training unit 116 calculates errors used to update the parameters of the neural network.

The training unit 116 calculates errors between the noise-reduced images output by the inference unit 115 and their clean images. Specifically, the training unit 116 acquires clean images associated with the noisy images generated in S305, and calculates image reconstruction errors based on the noise-reduced images output by the inference unit 115 and the clean images.

An image reconstruction error $L_{rec}$ regarding an image at certain time t is obtained by calculating an L1 error expressed by equation 1 shown below using a noise-reduced image $\hat{I}_t$ and a clean image It.

$$L_{rec} = \left| I_t - \hat{I}_t \right| \qquad (1)$$

In S309, the parameters of the neural network for the first stage 519 and the second stage 520 are updated with the error back propagation method by using the training unit 116 and the errors calculated in S308.

The processes from S307 to S309 described above are repeatedly executed for each consecutive image sequence in a temporal direction until reaching the last frame of the video.

A training process of the neural network, which is repeatedly executed from S302 to S309, is terminated based on a training termination condition.

By applying the described configuration and control, it is possible to train the weights of node connections that are difficult to be trained in terms of the structure of the neural network. Similar advantageous effects to those of ensemble training are obtained by using a plurality of neural networks, so the effect of reducing variation in the image quality of images output from the neural network can be expected.

By using the first neural network that has been trained as described above, it is possible to construct an information processing apparatus that removes noise from temporally consecutive images captured by, for example, an image capturing apparatus or the like.

In an example of the configuration of an information processing apparatus 120 shown in Fig. 2B, the configuration of an information processing apparatus that removes noise from images captured by the image capturing apparatus 150 is shown. The information processing apparatus 120 is made up of the image acquisition unit 111 and the inference unit 115. The inference unit 115 uses the first neural network that has been trained by the information processing apparatus 100 (training apparatus) to apply the noise reduction process to input images.

The information processing apparatus 120 configured as described above outputs noise-reduced images in accordance with a series of processes shown in Fig. 4. In this case, the image acquisition unit 111 acquires images that are momentarily captured by the image capturing apparatus 150 at the time of acquiring the noisy images in S401. When the image acquisition unit 111 acquires time-series images of a time length used for the inputs of the neural network, the image acquisition unit 111 uses the time-series images as the inputs of the neural network. After that, the process similar to that as described above is executed, and noise-reduced images are acquired.

First Modification

As a first modification that is a mode derived from the first embodiment, an example of a configuration that outputs input images and noise-reduced images of three consecutive times will be described.

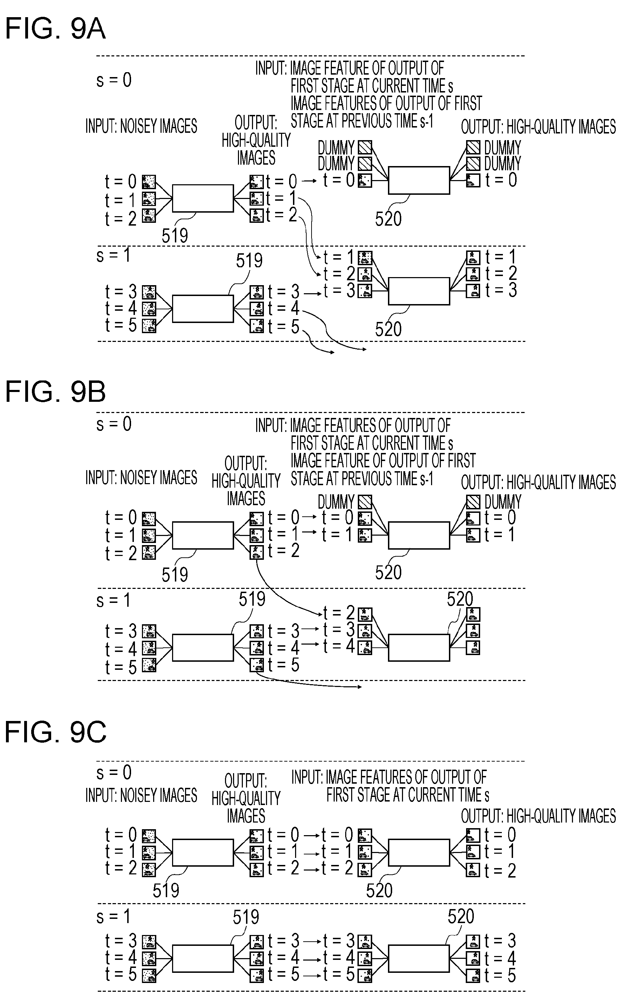

An example of the structure of a neural network according to the first modification will be described with reference to Figs. 9A to 9C. Among the examples shown in Figs. 9A to 9C, the neural network shown in Fig. 9B is assumed as a target neural network for training. Examples of the structure of the neural network, different in node connections and input-output temporal relationship from the structure of the neural network shown in Fig. 9B, include two structures shown in Figs. 9A and 9C.

Hereinafter, the inference processes of the neural networks having the structures shown in Figs. 9A to 9C will be described. The inference process is assumed as an inference process at certain time s at which image processing is performed. The oldest time of images input at this time is referred to as reference time t.

The neural network shown in Fig. 9A uses an image at time t, an image at time t+1, and an image at time t+2 as inputs. Using these images as inputs, the first stage 519 outputs an image feature at time t, an image feature at time t+1, and an image feature at time t+2. Among the series of image features output from the first stage 519, the image feature at time t+1 and the image feature at time t+2 are output to be input to the second stage 520 in image processing at the next time s+1.

The second stage 520 uses an image feature at time t-2, an image feature at time t-1, and the image feature at time t as inputs. The image feature at time t output from the first stage 519 in image processing at time s is used as the feature at time t. In addition, image features in image processing at previous time s-1 are used as the image feature at time t-2 and the image feature at time t-1. Using these image features as inputs, the second stage 520 outputs images to which image processing at time t-2, time t-1, and time t is applied.

The neural network shown in Fig. 9B uses an image at time t, an image at time t+1, and an image at time t+2 as inputs. Using these images as inputs, the first stage 519 outputs an image feature at time t, an image feature at time t+1, and an image feature at time t+2. Among the series of image features output from the first stage 519, the image feature at time t+2 is output to be input to the second stage 520 in image processing at the next time s+1.

The second stage 520 uses an image feature at time t-1, the image feature at time t, and the image feature at time t+1 as inputs. The image feature at time t and the image feature at time t+1, output from the first stage 519 in image processing at time s, are used as the feature at time t and the feature at time t+1. In addition, an image feature in image processing at previous time s-1 is used as the image feature at time t-1. Using these image features as inputs, the second stage 520 outputs images to which image processing at time t-1, time t, and time t+1 is applied.

The neural network shown in Fig. 9C uses an image at time t, an image at time t+1, and an image at time t+2 as inputs. Using these images as inputs, the first stage 519 outputs an image feature at time t, an image feature at time t+1, and an image feature at time t+2.

The second stage 520 uses the image feature at time t, the image feature at time t+1, and the image feature at time t+2 as inputs. The image feature at time t, the image feature at time t+1, and the image feature at time t+2, output from the first stage 519 in image processing at time s, are used as the feature at time t, the feature at time t+1, and the feature at time t+2. Using these image features as inputs, the second stage 520 outputs images to which image processing at time t, time t+1, and time t+2 is applied.

The neural network is trained while being switched among the three neural networks having different node connections and input-output temporal relationships from one another. As described above, depending on the structure of the neural network, the structure different in node connections and input-output temporal relationship is not limited to only two patterns described in the first embodiment, and various configurations can be adopted. When the neural network is trained while being switched among a further large number of structures, the effect of further reducing variation in the output of the neural network can be expected.

Second Embodiment

In the above-described first embodiment, an example in which the neural network is trained while being switched between the neural networks having different node connections and input-output temporal relationships from each other based on a predetermined probability. In the present embodiment, an example in which the neural network is trained while the probability to switch between neural networks having different node connections and input-output temporal relationships is changed based on the inference result of the neural network will be described.

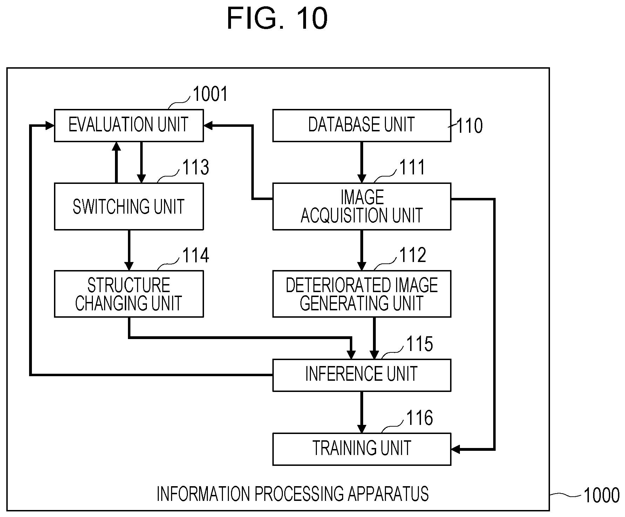

An example of the functional configuration of an information processing apparatus 1000 (e.g., training apparatus) according to the present embodiment will be described with reference to Fig. 10. The information processing apparatus 1000 differs from the information processing apparatus 100 according to the first embodiment, described with reference to Fig. 2A, in that the information processing apparatus 1000 includes an evaluation unit 1001. The other components are substantially similar to those of the information processing apparatus 100 shown in Fig. 2A, so the detailed description is omitted.

The evaluation unit 1001 calculates an evaluation value by using an inference result of the neural network.

A calculation method for an evaluation value and a process using the evaluation value will be separately described in detail.

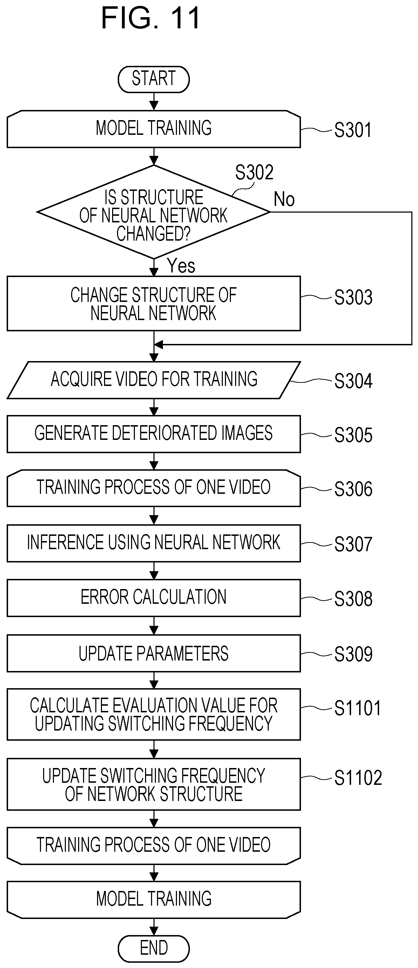

Subsequently, an example of the process performed by the information processing apparatus 1000 (e.g., training apparatus) according to the present embodiment will be described with reference to Fig. 11 together with the functional configuration shown in Fig. 10. In the present embodiment as well, various descriptions will be provided focusing on a case where the noise reduction process is applied as an example of high-quality image processing as in the case of the above-described first embodiment.

A series of processes from S301 to S309 is substantially similar to the processes described in the first embodiment, so the detailed description thereof is omitted. However, the present embodiment differs from the above-described first embodiment in that the probability that the switching unit 113 switches to each of the two predetermined structures of the neural networks in S302 is determined by the process of S1102 (described later). The probability to switch to each of the two-structure neural networks is assumed to be 50% at the start of training.

In S1101, the evaluation unit 1001 calculates an evaluation value by using the result inferred by the neural network in S307.

The evaluation unit 1001 calculates a different evaluation value according to the structure of the neural network. An evaluation value calculated by the evaluation unit 1001 is determined in advance according to the structure of the neural network for training, e.g., as determined by the switching unit 113.

When, for example, the structure of the neural network of the inference unit 115 is a first neural network, the evaluation unit 1001 may calculate an evaluation value based on peak signal to noise ratios (PSNRs) of noise-reduced images output. Hereinafter, the calculation method for an evaluation value will be described on the assumption that, in the inference process at certain time s, the oldest time of the input images is referred to as reference time t.

Initially, the evaluation unit 1001 calculates PSNRs by using generated noise-reduced images and clean images corresponding to the noise-reduced images. A calculation formula for PSNR is shown below as equation 2-1. In the calculation formula shown below, a clean image is denoted by $I_c$, a noise-reduced image is denoted by $I_{nr}$, and pixel positions are denoted by i, j.

Based on the above, the evaluation unit 1001 initially calculates a mean squared error (MSE). Subsequently, the evaluation unit 1001 calculates a PSNR by using the calculated MSE. At this time, the PSNR is calculated by using the maximum pixel value MAX of an image.

Subsequently, the evaluation unit 1001 calculates a difference E between the PSNRs respectively calculated for time t-1 and time t as expressed by equation 2-2 below. After that, the evaluation unit 1001 sets a threshold in advance for the difference E between PSNRs at times, and, when the difference E between PSNRs at times exceeds the threshold, the switching unit 113 increases the probability to switch to the second neural network. In a specific example, when the difference E between PSNRs at times exceeds the threshold, the evaluation unit 1001 may change the probability to switch to the second neural network from 50%, which is set as an initial value, to 75%.

$$MSE = \frac{1}{N} \sum_{i,j} \left( I_{c_{i,j}} - I_{nr_{i,j}} \right)^2$$

$$PSNR = 10 \cdot \log_{10} \left( \frac{MAX^2}{MSE} \right) \qquad (2-1)$$

$$E = |PSNR_t - PSNR_{t-1}| \qquad (2-2)$$

Evaluations used by the evaluation unit 1001 are not limited to the above-described example. Therefore, another example of the calculation method for an evaluation value will be described below focusing on a case where a neural network that outputs three noise-reduced images is applied as in the case of the above-described first modification.

The evaluation unit 1001 initially calculates PSNRs by using the clean images corresponding to the output noise-reduced images. After that, the evaluation unit 1001 calculates a variance for the calculated PSNRs of the images of three consecutive times. The evaluation unit 1001 may set a threshold in advance for the variance of PSNR and, when the calculated variance exceeds the threshold, increase the probability that the switching unit 113 switches to the second neural network. A calculation method for the variance and a calculation method for the evaluation value E, which can be applied to evaluations as to whether the switching unit 113 increases the probability of switching to the second neural network, are expressed as equation 3 below.

$$MEAN = \frac{1}{T} \sum_t PSNR_t$$

$$E = \frac{1}{T} \sum_t (PSNR_t - MEAN)^2 \qquad (3)$$

The first neural network outputs an image corresponding to an image feature output in the inference process at current time s and an image corresponding to an image feature output in the inference process at previous time s-1, in the inference process at current time s. At this time, image quality is likely to be different between the image output in correspondence with the image feature output in the inference process at current time s and the image output in correspondence with the image feature output in the inference process at previous time s-1.

When the structure of the neural network of the inference unit 115 is the structure of the second neural network, the evaluation unit 1001 calculates an evaluation value based on a motion blur amount by using output noise-reduced images. The motion blur amount is a value that indicates the magnitude of blur caused by the motion of a subject, and is calculated by performing frequency analysis on the target images. Hereinafter, the calculation method for an evaluation value will be described on the assumption that, in the inference process at current time s, the oldest time of the input images is referred to as reference time t.

The evaluation unit 1001 calculates the motion blur amounts of a noise-reduced image at time t-1, output at time s-1, and a noise-reduced image at time t and a noise-reduced image at tie t+1, output at time s. The difference between motion blur amounts at times (e.g., at different times, points in time, or time intervals) is calculated. For example, the difference between a motion blur amount at time t-1 and a motion blur amount at time t and the difference between a motion blur amount at time t and a motion blur amount at time t+1 are calculated. After that, the evaluation unit 1001 further calculates an evaluation value, which may be defined as the difference in the difference between motion blurs at temporally consecutive times. The evaluation unit 1001 sets a threshold in advance for the evaluation value. If the evaluation value between different times (e.g., the difference in the difference between motion blur amounts at different times) exceeds the threshold, then the evaluation unit 1001 increases the probability that the switching unit 113 switches to the first neural network. In a specific example, when the evaluation value exceeds the threshold, the evaluation unit 1001 may change the probability of switching to the first neural network from 50%, which is set as an initial value, to 75%.

Here, the calculation method for a motion blur amount will be described. Initially, multiple images obtained by moving a vertical stripe image by a constant amount in a horizontal direction are created. The created multiple images are treated as time-series images and input to the neural network to obtain noise-reduced images. Subsequently, motion blur amounts are calculated based on the method described in "Blur Estimation For Linear Motion Blurred Image, N. Yokota et al., Proceedings of the 42nd ISCIE International Symposium on Stochastic Systems Theory and Its Applications, pp. 271-276, Okayama, 2010". Specifically, the cepstrum of a noise-reduced image is initially calculated. After that, the distance from the peak of a negative value to the origin of the calculated cepstrum in the horizontal direction is measured. The distance measured in the above manner corresponds to a motion blur amount.

The second neural network, unlike the first neural network, does not use its own feature output in the inference process at previous time s-1, as an input. The second neural network outputs images for input images in the inference process at current time s. Therefore, image quality is likely to be different between the image output in the inference process at current time s and the image output in the inference process at previous time s-1, which corresponds to a seam. Particularly, when there is a moving object in an image, information about the moving object, generated at time s, and information about the moving object, generated at time s-1, are not shared, so the way the moving object appears as a video can vary. Therefore, the difference in motion blur amount tends to be large between the image output at time s and the image output at time s-1.

An evaluation value used to evaluate the second neural network is not limited to an evaluation value based on the above-described motion blur amount, and may be an evaluation value using a difference in PSNR like the first neural network. However, at least one of the neural networks calculates the difference in PSNR between time-series images respectively calculated at time s-1 and time s.

In S1102, the switching unit 113 changes the probability to switch between the neural networks, different in node connections and input-output temporal relationship from each other, based on the evaluation value calculated in S1101.

When the configuration and control described above are applied, the probability to switch to the neural network having a structure without adverse effects increases with an increase in the adverse effects on image quality, caused by the structure of the neural network. As a result, it is possible to train the neural network while minimizing the degree of adverse effects on image quality that can be caused by the structure of the neural network.

Third Embodiment

In the above-described first embodiment, when the structure of the neural network is switched, the same training method is applied to both structures. In the present embodiment, an example of a case where the training method applied is also changed according to the structure of the neural network will be described.

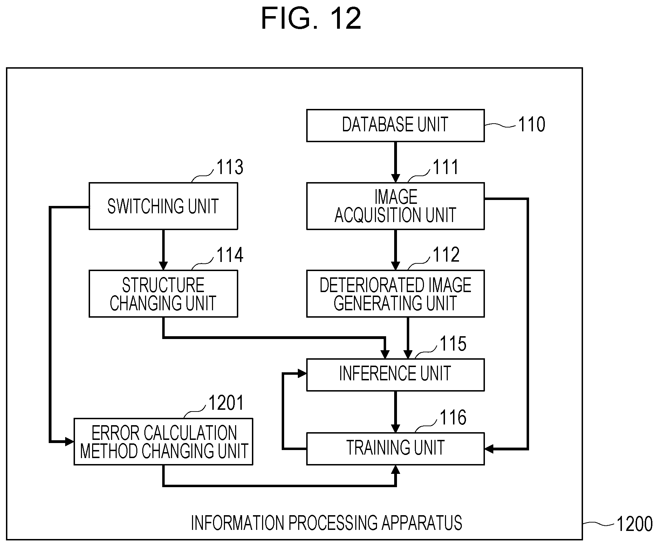

An example of the functional configuration of an information processing apparatus 1200 (e.g., training apparatus) according to the present embodiment will be described with reference to Fig. 12. The information processing apparatus 1200 differs from the information processing apparatus 100 according to the first embodiment, described with reference to Fig. 2A, in that the information processing apparatus 1200 includes an error calculation method changing unit 1201. The other components are substantially similar to those of the information processing apparatus 100 shown in Fig. 2A, so the detailed description is omitted.

The error calculation method changing unit 1201 changes an error calculation method with which the training unit 116 calculates an error, according to the structure of the neural network.

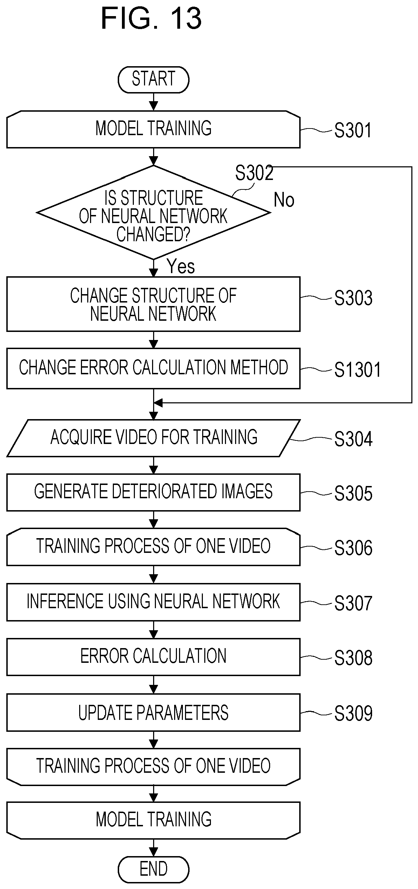

Subsequently, an example of the process performed by the information processing apparatus 1200 (e.g., training apparatus) according to the present embodiment will be described with reference to Fig. 13 together with the functional configuration shown in Fig. 12. In the present embodiment as well, various descriptions will be provided focusing on a case where the noise reduction process is applied as an example of high-quality image processing as in the case of the above-described first embodiment.

A series of processes from S301 to S309 is substantially similar to the processes described in the first embodiment, so the detailed description thereof is omitted. However, after the switching unit 113 determines the structure of the neural network for learning in S302, the error calculation method with which the training unit 116 calculates an error is changed by the error calculation method changing unit 1201. As a result, the error calculation method in S308 varies depending on the structure of the neural network.

In S1301, the error calculation method changing unit 1201 changes the error calculation method with which the training unit 116 calculates an error, according to the structure of the neural network for training, determined in S302. The calculation method for an error, applied for each structure of the neural network, is defined in advance.

Specifically, when the neural network for training is the first neural network, the error calculation method changing unit 1201 changes the error calculation method to an error calculation method that puts a higher priority on errors related to temporal image quality. On the other hand, when the neural network for training is the second neural network, the error calculation method changing unit 1201 changes the error calculation method to an error calculation method that puts a higher priority on errors related to single image quality. The details of the error calculation method in each case will be separately described later.

In the inference process at certain time s, where the oldest time of input images is reference time t, the first neural network receives inputs of three times. For example, an image feature at time t-1, an image at time t, and an image at time t+1. On the other hand, the second neural network receives inputs of two times, that is, time t and time t+1 in the inference process at certain time s. In this way, the first neural network can use longer time information than the second neural network.

The images input and output in the first neural network are temporally successive between the image feature output at previous time s-1 and the image input at current time s. Therefore, the first neural network appears smoother than the second neural network when the output images are viewed continuously.

In this way, the first neural network has an advantage in temporal image quality. Because of such characteristics, the first neural network can be trained by using errors that put a higher priority on, for example, temporal image quality. When such a training method is applied, it is possible to obtain parameters of the neural network further excellent in temporal image quality.

On the other hand, the second neural network is more difficult to use time information than the first neural network as described above, but the second neural network can focus on the image quality of output images to update the parameters of the neural network. The structure of the second neural network is such that nodes inside the neural network are completely connected from when an input image is input to when an image is output. With this configuration, errors during error back propagation are equally propagated, with the result that variation in image quality and network parameters among output images of the neural network is small.

From such characteristics, the second neural network can be trained so as to put a higher priority on, for example, image quality. When such a training method is applied, it is possible to quickly, and easily reduce variation in image quality in the first neural network and obtain parameters of the neural network specialized for image quality.

In S308, the training unit 116 calculates errors used to update the parameters of the neural network. At this time, the training unit 116 calculates errors based on the error calculation method determined according to the structure of the neural network in S1301.

In the error calculation method for the first neural network, errors that put a higher priority on temporal image quality are calculated. In a specific example, error calculation methods, such as adding errors related to temporal image quality and increasing the weights of errors related to temporal image quality, can be applied.

In the present embodiment, the difference between output noise-reduced images is used as a predicted value, and the difference between clean images is used as a true value, and then the difference between the true value and the predicted value is used as an error related to temporal image quality. By using this error, training is performed so as to estimate the difference between images at consecutive times, so images at consecutive times appear smooth when the images are continuously viewed in the temporal direction. The effect of reducing a phenomenon that, when a still region in an image is viewed as a moving image, the still region appears shaky is also expected.

The above error is referred to as temporal error $L_{temp}$. Of images output from the first neural network, the older one corresponds to time t-1, and the newer one corresponds to time t. After that, where a clean image is denoted by $I_c$ and a noise-reduced image is denoted by $I_{nr}$, the temporal error $L_{temp}$ is expressed by equation 4 shown below.

$$L_{temp} = \left|\left(I_{c_t} - I_{c_{t-1}}\right) - \left(I_{nr_t} - I_{nr_{t-1}}\right)\right| \qquad (4)$$

After that, the weighted sum of two errors, that is, the above-described temporal error $L_{temp}$ and the image reconstruction error $L_{rec}$ for generating a noise-reduced image, expressed by equation 1, is used as a final error. The final error L is expressed by equation 5 shown below by using a weight $\alpha$ that takes a value of 0 to 1.

The first neural network performs training by using the error shown in equation 5.

$$L = \alpha L_{rec} + (1 - a)L_{temp} \qquad (5)$$

In the error calculation method for the second neural network, an error that puts a higher priority on single image quality is calculated. In a specific example, error calculation methods, such as adding errors related to single image quality and increasing the weights of errors related to single image quality, can be applied.

In the present embodiment, in addition to the image reconstruction error expressed by equation 1, a noise regularization error is used as an error related to image quality. By using these errors, it is possible to adjust the image quality of each output image.

The noise regularization error is the difference between noise-reduced images of two images of the same scene to which different noises are added. When the neural network is trained by using this error, the effect of reducing artifacts and residual noise is expected.

The noise regularization error $L_{nreg}$ is expressed by equation 6 shown below. A noise-reduced image obtained as an image processing result when a noisy image at certain time t is input to the second neural network is denoted by $I_{nr}$. Regarding the noisy image at certain time t, another noisy image to which a noise different from that of the noisy image is added is input to the second neural network, and a noise-reduced image obtained as a result is denoted by $I'_{nr}$. An L1 error calculated by using these noise-reduced images $I_{nr}$, $I'_{nr}$ is referred to as noise regularization error $L_{nreg}$.

$$L_{nreg} = \left| I_{nr_t} - I'_{nr_t} \right| \qquad (6)$$

After that, the weighted sum of two errors, that is, the above-described noise regularization error $L_{nreg}$ and the image reconstruction error $L_{rec}$ for generating a noise-reduced image, expressed by equation 1, is used as a final error. The final error L is expressed by equation 7 shown below by using a weight $\alpha$ that takes a value of 0 to 1. The second neural network performs training by using the error shown in equation 7.

$$L = \alpha L_{rec} + (1 - \alpha)L_{nreg} \qquad (7)$$

As described above, the error used may be changed for each structure of the neural network or the weights related to the error may be changed. For example, the second neural network may also perform training by using the error L expressed by equation 5. In that case, for example, it is possible to perform training while putting a higher priority on the image reconstruction error $L_{rec}$ than the temporal error $L_{temp}$ by further reducing the value of the weight $\alpha$ set at the time of training the first neural network. In other words, the first neural network can perform training that puts a higher priority on temporal image quality, and the second neural network can perform training that puts a higher priority on single image quality.

As described above, according to the present embodiment, the neural network is trained while the error used for training is changed according to the structure of the neural network. At this time, training that uses the characteristics of each structure is performed, and training of each structure is alternately performed. When the above control and configuration are applied, it is possible to obtain parameters of the neural network that further takes advantage of strong points and compensates for weak points in light of differences in properties of each structure.

Other Embodiments

The present disclosure may also be implemented by a process in which a program that implements one or more functions of the above-described embodiments is supplied to a system or an apparatus via a network or a storage medium and one or more processors in a computer of the system or apparatus read and run the program. Alternatively, the present disclosure may be implemented by a circuit (for example, ASIC) that implements one or more functions.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to example embodiments, it is to be understood that the invention is not limited to the disclosed example embodiments. The scope of the following claims encompass all such substitutions, modifications and equivalent structures and functions apparent to those skilled in the art.

**Claims**

1. An information processing apparatus (100; 1000; 1200) comprising:

an inference unit (115) to which a neural network is applied, the neural network being configured to use at least one of a set of temporally consecutive images and a set of temporally consecutive image features as inputs, and output at least one of a set of images and a set of image features, to which image processing is applied, for the inputs;

a determining unit (113) configured to determine which one of a first configuration and a second configuration to which the neural network is to be configured, wherein the first configuration has a first input-output temporal relationship and the second configuration has a second input-output temporal relationship different from the first input-output temporal relationship;

a configuration changing unit (114) configured to change a node connection of the neural network and an input-output temporal relationship of the neural network to change the configuration of the neural network according to the result determined by the determining unit; and

a training unit (116) configured to train the neural network.

2. The information processing apparatus according to Claim 1, wherein the first configuration is configured to use an image feature output in a past inference process by the neural network and an image that is an input for a current inference process, as inputs.

3. The information processing apparatus according to Claim 2, wherein the first configuration is, for the inputs, configured to output:

an image to which image processing, corresponding to an image feature output in a past inference process by the neural network, is applied; and

at least one of an image and an image feature, to which image processing corresponding to the image input in the current inference process, is applied.

4. The information processing apparatus according to Claim 3, wherein the first configuration is configured such that the image feature output in the past inference process by the neural network and given as the input is input in a state of being disconnected from nodes of the neural network.

5. The information processing apparatus according to any one of the preceding claims, wherein the second configuration is configured to use images as the inputs.

6. The information processing apparatus according to any one of the preceding claims, wherein the determining unit is configured to probabilistically determine which one of the first configuration and the second configuration, to which the configuration of the neural network is configured.

7. The information processing apparatus according to any one of the preceding claims, wherein the training unit is configured to train the neural network by using an error calculated based on a difference between an image to which image processing corresponding to an input given to the neural network, and an image output by the neural network.

8. The information processing apparatus according to Claim 7, wherein the training unit is configured to update parameters of the neural network with an error back propagation method using the error.

9. The information processing apparatus according to any one of the preceding claims, wherein the configuration changing unit is configured to change the configuration of the neural network to any one of three or more configurations that are different from one another in a node connection of the neural network and an input-output temporal relationship of the neural network.

10. The information processing apparatus according to any one of the preceding claims, further comprising an evaluation unit configured to calculate variation in image quality among a series of images output from the neural network and to which image processing is applied, as an evaluation value, wherein
the determining unit is configured to change a probability based on the evaluation value calculated by the evaluation unit, the probability determining which one of the first configuration and the second configuration, to which the configuration of the neural network is configured.

11. An information processing apparatus (120) comprising:
an acquisition unit (111) configured to acquire an image captured by an image capturing apparatus (150); and

an image processing unit (115) configured to input the image acquired by the acquisition unit to a neural network to apply image processing to the image, the neural network being configured to use at least one of a set of temporally consecutive images and a set of temporally consecutive image features as inputs, and output at least one of a set of images and a set of image features, to which the image processing is applied, for the inputs, wherein
the neural network is configured to be trained in a manner such that which one of a first configuration and a second configuration, to which the neural network is to be configured, is determined, the first configuration has a first input-output temporal relationship, the second configuration has a second input-output temporal relationship different from the first input-output temporal relationship, and the neural network is configured according to the determined result by changing a node connection and an input-output temporal relationship of the neural network.

12. A control method for an information processing apparatus (100; 1000; 1200), the control method comprising:

an inference step to which a neural network is applied, the neural network being configured to use at least one of a set of temporally consecutive images and a set of temporally consecutive image features as inputs, and output at least one of a set of images and a set of image features, to which image processing is applied, for the inputs;
a determining step of determining which one of a first configuration and a second configuration to which the neural network is to be configured, wherein the first configuration has a first input-output temporal relationship and the second configuration has a second input-output temporal relationship different from the first input-output temporal relationship;
a configuration changing step of changing a node connection of the neural network and an input-output temporal relationship of the neural network to change the configuration of the neural network according to the result determined by the determining step; and
a training step of training the neural network.

13. A control method for an information processing apparatus (120), the control method comprising:

an acquisition step of acquiring an image captured by an image capturing apparatus (150); and
an image processing step of inputting the image acquired by the acquisition step to a neural network to apply image processing to the image, the neural network being configured to use at least one of a set of temporally consecutive images and a set of temporally consecutive image features as inputs, and outputting at least one of a set of images and a set of image features, to which the image processing is applied, for the inputs, wherein
the neural network is configured to be trained in a manner such that which one of a first configuration and a second configuration, to which the neural network is to be configured, is determined, the first configuration has a first input-output temporal relationship, the second configuration has a second input-output temporal relationship different from the first input-output temporal relationship, and the neural network is configured according to the determined result by changing a node connection and an input-output temporal relationship of the neural network.

14. A program for causing a computer to function as an information processing apparatus (100; 1000; 1200) comprising:

an inference unit (115) to which a neural network is applied, the neural network being configured: to use at least one of a set of temporally consecutive images and a set of temporally consecutive image features as inputs; and output at least one of a set of images and a set of image features, to which image processing is applied, for the inputs;

a determining unit (113) configured to determine which one of a first configuration and a second configuration to which the neural network is to be configured, wherein the first configuration has a first input-output temporal relationship and the second configuration has a second input-output temporal relationship different from the first input-output temporal relationship;

a configuration changing unit (114) configured to change a node connection of the neural network and an input-output temporal relationship of the neural network to change the configuration of the neural network according to the result determined by the determining unit; and

a training unit (116) configured to train the neural network.

15. A program for causing a computer to function as an information processing apparatus (120) comprising:

an acquisition unit (111) configured to acquire an image captured by an image capturing apparatus (150); and

an image processing unit (115) configured to: input the image acquired by the acquisition unit to a neural network to apply image processing to the image, the neural network being configured to use at least one of a set of temporally consecutive images and a set of temporally consecutive image features as inputs; and output at least one of a set of images and a set of image features, to which the image processing is applied, for the inputs, wherein the neural network is configured to be trained in a manner such that which one of a first configuration and a second configuration, to which the neural network is to be configured, is determined, the first configuration has a first input-output temporal relationship, the second configuration has a second input-output temporal relationship different from the first input-output temporal relationship, and the neural network is configured according to the determined result by changing a node connection and an input-output temporal relationship of the neural network.

# FIG. 1

```
  101              102              103
  CPU            MEMORY         INPUT UNIT
   |               |               |
───┼───────────────┼───────────────┼───────────────
       |                 |                 |
  STORAGE UNIT      DISPLAY UNIT    COMMUNICATION
                                        UNIT
       104              105              106
```

# FIG. 2A

DATABASE UNIT — 110

IMAGE ACQUISITION UNIT — 111

DETERIORATED IMAGE GENERATING UNIT — 112

SWITCHING UNIT — 113

STRUCTURE CHANGING UNIT — 114

INFERENCE UNIT — 115

TRAINING UNIT — 116

INFORMATION PROCESSING APPARATUS — 100

# FIG. 2B

IMAGE CAPTURING APPARATUS — 150

IMAGE ACQUISITION UNIT — 111

INFERENCE UNIT — 115

INFORMATION PROCESSING APPARATS — 120

# FIG. 3

```
                    ( START )
                        │
                        ▼
        ┌───────────────────────────────┐
        │        MODEL TRAINING          │──── S301
        └───────────────────────────────┘
                        │
                        ▼           S302
                  ╱──────────────╲
                 ╱   IS STRUCTURE  ╲      No
                ╱  OF NEURAL NETWORK ╲────────────┐
                ╲     CHANGED?      ╱              │
                 ╲────────────────╱               │
                        │ Yes                     │
                        ▼                         │
        ┌───────────────────────────────┐        │
        │      CHANGE STRUCTURE OF       │──── S303│
        │        NEURAL NETWORK          │        │
        └───────────────────────────────┘        │
                        │◄───────────────────────┘
                        ▼
        ╱───────────────────────────────╱
        │   ACQUIRE VIDEO FOR TRAINING   │──── S304
        ╱───────────────────────────────╱
                        │
                        ▼
        ┌───────────────────────────────┐
        │   GENERATE DETERIORATED IMAGES │──── S305
        └───────────────────────────────┘
                        │
                        ▼
        ┌───────────────────────────────┐
        │   TRAINING PROCESS OF ONE VIDEO│──── S306
        └───────────────────────────────┘
                        │
                        ▼
        ┌───────────────────────────────┐
        │  INFERENCE USING NEURAL NETWORK│──── S307
        └───────────────────────────────┘
                        │
                        ▼
        ┌───────────────────────────────┐
        │       ERROR CALCULATION        │──── S308
        └───────────────────────────────┘
                        │
                        ▼
        ┌───────────────────────────────┐
        │       UPDATE PARAMETERS        │──── S309
        └───────────────────────────────┘
                        │
                        ▼
        ┌───────────────────────────────┐
        │   TRAINING PROCESS OF ONE VIDEO│
        └───────────────────────────────┘
                        │
                        ▼
        ┌───────────────────────────────┐
        │        MODEL TRAINING          │
        └───────────────────────────────┘
                        │
                        ▼
                    (  END  )
```

# FIG. 4

```
                    ┌─────────┐
                    │  START  │
                    └────┬────┘
                         ▼
              ╱──────────────────────╲
             ╱   ACQUIRE              ╲──────── S401
             ╲   NOISY IMAGES         ╱
              ╲──────────────────────╱
                         ▼
              ┌──────────────────────┐
              │  IMAGE PROCESSING    │──────── S402
              │  WITH FIRST STAGE    │
              └──────────┬───────────┘
                         ▼                   S403
                    ╱─────────╲
                  ╱  ARE THERE   ╲        No
                 ╱ IMAGE FEATURES AT╲──────────────────┐
                 ╲ PREVIOUS TIME?   ╱                   │
                  ╲───────┬───────╱                     │
                   Yes    │   S404                      │  S405
                          ▼                             ▼
              ┌──────────────────────┐    ┌──────────────────────────┐
              │ ACQUIRE IMAGE FEATURE│    │  GENERATE IMAGE FEATURE  │
              │   AT PREVIOUS TIME   │    │ OF DUMMY AT PREVIOUS TIME│
              └──────────┬───────────┘    └─────────────┬────────────┘
                         │                              │
                         ▼◄─────────────────────────────┘
              ┌──────────────────────┐
              │ IMAGE PROCESSING WITH│──────── S406
              │   SECOND STAGE       │
              └──────────┬───────────┘
                         ▼
                    ┌─────────┐
                    │   END   │
                    └─────────┘
```

# FIG. 5

s = 0

INPUT: NOISY IMAGES

OUTPUT: IMAGE
FEATURES

INPUT: IMAGE FEATURE OF OUTPUT OF
FIRST STAGE AT CURRENT TIME s
IMAGE FEATURE OF OUTPUT OF
FIRST STAGE AT PREVIOUS TIME s-1

OUTPUT: NOISE-REDUCED IMAGES

501

t = 0

t = 1

502

515    503

t = 0

516    504

519

514

505    517

t = 0

503    518

520

506

t = 0

507

s = 1

521

508

t = 2

t = 3

509

515    510

t = 2

516    511

519

504    517

t = 1

t = 2

510    518

520

512

t = 1

t = 2

513

# FIG. 6

s = 0

INPUT: NOISY IMAGES

OUTPUT: IMAGE FEATURES

515

INPUT: IMAGE FEATURES OF OUTPUT OF FIRST STAGE AT CURRENT TIME s

601

517

OUTPUT: NOISE-REDUCED IMAGES

t = 0

t = 1

501

516   504

t = 0

t = 1

602

t = 0

t = 1

504   518

502

t = 0

t = 1

s = 1

515

517

t = 2

t = 3

501

516

t = 2

t = 3

t = 2

t = 3

518

502

t = 2

t = 3

FIG. 7

→ : CONVOLUTION + RELU
— : CONCATENATION
⇩ : POOLING
⇧ : DECONVOLUTION

# FIG. 8

: CONVOLUTION + RELU
: CONCATENATION
: POOLING
: DECONVOLUTION

EP 4 625 252 A1

# FIG. 9A

# FIG. 9B

# FIG. 9C

26

# FIG. 10

INFORMATION PROCESSING APPARATUS ~1000

# FIG. 11

START

MODEL TRAINING ——— S301

IS STRUCTURE OF NEURAL NETWORK CHANGED? ——— S302

No

Yes

CHANGE STRUCTURE OF NEURAL NETWORK ——— S303

ACQUIRE VIDEO FOR TRAINING ——— S304

GENERATE DETERIORATED IMAGES ——— S305

TRAINING PROCESS OF ONE VIDEO ——— S306

INFERENCE USING NEURAL NETWORK ——— S307

ERROR CALCULATION ——— S308

UPDATE PARAMETERS ——— S309

CALCULATE EVALUATION VALUE FOR UPDATING SWITCHING FREQUENCY ——— S1101

UPDATE SWITCHING FREQUENCY OF NETWORK STRUCTURE ——— S1102

TRAINING PROCESS OF ONE VIDEO

MODEL TRAINING

END

# FIG. 12

```
                    ┌──────────────────────┐
                    │   DATABASE UNIT       │─────110
                    └──────────────────────┘
                              │
      ┌──────────────┐        ▼   ┌──────────────────────┐
      │              │────113     │        IMAGE          │────111
      │ SWITCHING    │            │  ACQUISITION UNIT      │
      │ UNIT         │            └──────────────────────┘
      └──────────────┘                     │
              │                             ▼
      ┌──────────────┐────114     ┌──────────────────────┐
      │  STRUCTURE   │            │ DETERIORATED IMAGE    │────112
      │ CHANGING UNIT│            │  GENERATING UNIT      │
      └──────────────┘            └──────────────────────┘
              │                             │
              │                             ▼   115
              │                    ┌──────────────────────┐
              │          ┌────────▶│    INFERENCE UNIT     │
      ┌──────────────┐   │         └──────────────────────┘
      │              │──1201                │  116
      │    ERROR     │   │                  ▼
      │ CALCULATION  │   │         ┌──────────────────────┐
      │   METHOD     │───┘         │    TRAINING UNIT      │
      │CHANGING UNIT │─────────────│                       │
      └──────────────┘             └──────────────────────┘
```

INFORMATION PROCESSING APPARATUS ─────1200

# FIG. 13

```
                    ( START )
                        │
                        ▼
        ┌───────────────────────────────┐
        │        MODEL TRAINING         │──── S301
        └───────────────────────────────┘
                        │            S302
                        ▼           ┌──────────────────────────┐
                 ◇◇◇◇◇◇◇◇◇◇◇◇◇◇◇    │                          │
                ◇   IS STRUCTURE   ◇   No                      │
              ◇ OF NEURAL NETWORK   ◇──────┐                   │
                ◇    CHANGED?      ◇        │                  │
                 ◇◇◇◇◇◇◇◇◇◇◇◇◇◇◇           │                  │
                        │ Yes                                  │
                        ▼                                      │
        ┌───────────────────────────────┐                     │
        │    CHANGE STRUCTURE OF        │──── S303            │
        │     NEURAL NETWORK            │                     │
        └───────────────────────────────┘                     │
                        │                                      │
                        ▼                                      │
        ┌───────────────────────────────┐                     │
        │ CHANGE ERROR CALCULATION METHOD │── S1301           │
        └───────────────────────────────┘                     │
                        │◄─────────────────────────────────────┘
                        ▼
        ╱───────────────────────────────╱
       ╱   ACQUIRE VIDEO FOR TRAINING  ╱──── S304
      ╱───────────────────────────────╱
                        │
                        ▼
        ┌───────────────────────────────┐
        │   GENERATE DETERIORATED IMAGES │──── S305
        └───────────────────────────────┘
                        │
                        ▼
        ┌───────────────────────────────┐
        │   TRAINING PROCESS OF ONE VIDEO │── S306
        └───────────────────────────────┘
                        │
                        ▼
        ┌───────────────────────────────┐
        │  INFERENCE USING NEURAL NETWORK │── S307
        └───────────────────────────────┘
                        │
                        ▼
        ┌───────────────────────────────┐
        │       ERROR CALCULATION        │──── S308
        └───────────────────────────────┘
                        │
                        ▼
        ┌───────────────────────────────┐
        │       UPDATE PARAMETERS        │──── S309
        └───────────────────────────────┘
                        │
                        ▼
        ┌───────────────────────────────┐
        │   TRAINING PROCESS OF ONE VIDEO │
        └───────────────────────────────┘
                        │
                        ▼
        ┌───────────────────────────────┐
        │        MODEL TRAINING          │
        └───────────────────────────────┘
                        │
                        ▼
                    (  END  )
```

## EUROPEAN SEARCH REPORT

**Application Number**

EP 25 16 6260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | POURREZA REZA ET AL: "Extending Neural P-frame Codecs for B-frame Coding", 2021 IEEE/CVF INTERNATIONAL CONFERENCE ON COMPUTER VISION (ICCV), IEEE, 10 October 2021 (2021-10-10), pages 6660-6669, XP034092812, DOI: 10.1109/ICCV48922.2021.00661 [retrieved on 2022-02-10] * abstract * * Sections 1, 3, 4.1 and 4,2 * | 1-15 | INV. G06N3/045 G06N3/084 |
| A | LI TING LITING6259@GMAIL COM ET AL: "AutoST: Efficient Neural Architecture Search for Spatio-Temporal Prediction", PROCEEDINGS OF THE 13TH ACM SIGPLAN INTERNATIONAL SYMPOSIUM ON HASKELL, ACMPUB27, NEW YORK, NY, USA, 23 August 2020 (2020-08-23), pages 794-802, XP058732416, DOI: 10.1145/3394486.3403122 ISBN: 978-1-4503-8050-8 * abstract * * Sections 1-3 * | 1-15 | |
| A | ZENG DEWEN ET AL: "Towards Cardiac Intervention Assistance: Hardware-aware Neural Architecture Exploration for Real-Time 3D Cardiac Cine MRI Segmentation", 2020 IEEE/ACM INTERNATIONAL CONFERENCE ON COMPUTER AIDED DESIGN (ICCAD), ASSOCIATION ON COMPUTER MACHINERY, 2 November 2020 (2020-11-02), pages 1-8, XP033897897, [retrieved on 2020-11-10] * abstract * * Sections 1, 3 * | 1-15 | |

TECHNICAL FIELDS SEARCHED (IPC)

G06N

The present search report has been drawn up for all claims

| Place of search | Date of completion of the search | Examiner |
|---|---|---|
| The Hague | 22 July 2025 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 9406017 B

**Non-patent literature cited in the description**

• **N. YOKOTA et al.** Blur Estimation For Linear Motion Blurred Image. *Proceedings of the 42nd ISCIE International Symposium on Stochastic Systems Theory and Its Applications*, 2010, 271-276